# EUROPÄISCHE PATENTANMELDUNG

(11) **EP 4 711 311 A1**
(43) Veröffentlichungstag der Anmeldung: **18.03.2026**
(21) Anmeldenummer: 25198438.1
(22) Anmeldetag: 27.08.2025
(51) Int. Cl.: B65G 47/52, B65G 47/84

(54) **VORRICHTUNG ZUM AUSWERFEN, TRANSPORTSYSTEM UND ANLAGE ZUM HERSTELLEN UND/ODER BEHANDELN VON BEHÄLTERN**

(30) Priorität: 11.09.2024 DE 102024126147
(71) Anmelder: KHS GmbH, 44143 Dortmund (DE)
(72) Erfinder: Heller, Alexander, 44143 Dortmund (DE); Lewin, Frank, 44143 Dortmund (DE)

(57) **Zusammenfassung**

Die Erfindung betrifft eine Vorrichtung (10) zum Auswerfen mindestens eines Behälters (12), umfassend mindestens eine Führung (14) zum Führen des mindestens einen Behälters entlang einer Transportrichtung (16) mit einem ersten Seitenführungsabschnitt (18) und einem quer zur Transportrichtung von dem ersten Seitenführungsabschnitt beabstandet angeordneten zweiten Seitenführungsabschnitt (20), der zwischen einer Produktionsstellung zum Führen des mindestens einen Behälters (12) entlang der Transportrichtung und einer Offenstellung, in der der zweite Seitenführungsabschnitt quer zur Transportrichtung weiter von dem ersten Seitenführungsabschnitt als in der Produktionsstellung angeordnet ist, beweglich gelagert ist, wobei der zweite Seitenführungsabschnitt zwischen der Produktionsstellung und der Offenstellung eine Umschaltstellung aufweist, wobei die Vorrichtung weiter mindestens ein Federkraftelement (28) aufweist, das an dem zweiten Seitenführungsabschnitt derart befestigt ist, dass das mindestens eine Federkraftelement den zweiten Seitenführungsabschnitt zwischen der Produktionsstellung und der Umschaltstellung quer zur Transportrichtung zu dem ersten Seitenführungsabschnitt drückt und den zweiten Seitenführungsabschnitt zwischen der Offenstellung und der Umschaltstellung quer zur Transportrichtung von dem ersten Seitenführungsabschnitt weg drückt. Die Vorrichtung weist eine erhöhte Sicherheit des Auswerfens bei einer hohen Durchsatzrate der geführten Behälter auf.

## Beschreibung

Die Erfindung betrifft eine Vorrichtung zum Auswerfen und ein Transportsystem und Anlage zum Herstellen und/oder Behandeln von Behältern.

Der Transport von Behältern, insbesondere von Vorformlingen, die vorher sortiert wurden, kann durch das Erzeugen eines Behälterstroms bzw. Vorformlingsstroms durchgeführt werden. In dem Behälterstrom bzw. Vorformlingsstrom werden eine Vielzahl von Vorformlingen und/oder Behältern unmittelbar nacheinander transportiert. Der Transport kann jedoch auch in anderer Weise, beispielsweise vereinzelt, erfolgen.

So können die Behälter Haltekragen aufweisen, mit denen sie entlang von Führungsschienen hängend transportiert werden können. Der Transport kann über eine erzwungene Gleitbewegung entlang der Führungsschienen stattfinden. Bei der Übergabe der Behälter bzw. Vorformlinge an Maschinen, die jeden Behälter bzw. Vorformling einzeln behandeln, findet eine Vereinzelung der Behälter bzw. Vorformlinge statt. Um zu vermeiden, dass bei einer inkorrekten Vereinzelung der Behälter bzw. Vorformlinge und/oder einer inkorrekten Lage der zu vereinzelnden Behälter bzw. Vorformlinge ein Produktionsstopp zum Beheben der Fehler durchgeführt werden muss, werden inkorrekt vereinzelte Behälter bzw. Vorformlinge und/oder Behälter bzw. Vorformlinge mit einer inkorrekten Lage durch ein Ausleitmechanismus ausgeleitet.

Dazu ist beispielsweise aus DE 10 2009 016 593 A1 bekannt, Behälter aus einer Sortiervorrichtung mittels einer beweglichen Schiene auszuleiten, die zusammen mit einer stationären Schiene eine Führung für die Behälter bereitstellt. Die Behälter werden dabei in einen Spalt zwischen den beiden Schienen geführt und transportiert. Die bewegliche Schiene kann zum Ausleiten um einen Schwenkpunkt geschwenkt werden, um auf diese Weise einen Abstand der beiden Schienen zu vergrößern, sodass die Behälter bzw. Vorformlinge durch den Spalt zwischen den Schienen fallen. Damit kann ein Auswurf der Vorformlinge bewirkt werden. Bei hohen Durchsatzraten kann ein Zustand auftreten, bei der die bewegliche Schiene jedoch nicht rechtzeitig genug bewegt werden kann, um einen sicheren Auswurf der Behälter zu gewährleisten.

Im Folgenden wird unter einem Behälter auch ein Vorformling verstanden, der als Vorformling für einen Behälter ausgebildet ist.

Aufgabe der Erfindung ist es, eine Vorrichtung zum Auswerfen bereitzustellen, die eine erhöhte Sicherheit des Auswerfens bei einer hohen Durchsatzrate der geführten Behälter aufweist.

Die Aufgabe wird durch die Merkmale der unabhängigen Ansprüche gelöst. Vorteilhafte Weiterbildungen sind Gegenstand der abhängigen Ansprüche sowie der folgenden Beschreibung.

Gemäß einem ersten Aspekt wird eine Vorrichtung zum Auswerfen mindestens eines Behälters beschrieben, umfassend mindestens eine Führung zum Führen des mindestens einen Behälters entlang einer Transportrichtung mit einem ersten Seitenführungsabschnitt und einem quer zur Transportrichtung von dem ersten Seitenführungsabschnitt beabstandet angeordneten zweiten Seitenführungsabschnitt, der zwischen einer Produktionsstellung zum Führen des mindestens einen Behälters entlang der Transportrichtung und einer Offenstellung, in der der zweite Seitenführungsabschnitt quer zur Transportrichtung weiter von dem ersten Seitenführungsabschnitt als in der Produktionsstellung angeordnet ist, beweglich gelagert ist, wobei gemäß der Erfindung vorgesehen ist, dass der zweite Seitenführungsabschnitt zwischen der Produktionsstellung und der Offenstellung eine Umschaltstellung aufweist, wobei die Vorrichtung weiter mindestens ein Federkraftelement aufweist, das an dem zweiten Seitenführungsabschnitt derart befestigt ist, dass das mindestens eine Federkraftelement den zweiten Seitenführungsabschnitt zwischen der Produktionsstellung und der Umschaltstellung quer zur Transportrichtung zu dem ersten Seitenführungsabschnitt drückt und den zweiten Seitenführungsabschnitt zwischen der Offenstellung und der Umschaltstellung quer zur Transportrichtung von dem ersten Seitenführungsabschnitt weg drückt.

Mit der Vorrichtung wird damit ein beweglicher Seitenführungsabschnitt bereitgestellt, der automatisch in die Offenstellung gedrückt wird, sobald durch den geführten Behälter eine Kraft quer zur Transportrichtung bewirkt wird, die größer als die von dem Federkraftelement bewirkte Kraft ist und der zweite Seitenführungsabschnitt die Umschaltstellung überschreitet. Der Übergang des beweglichen zweiten Seitenführungsabschnitts von der Produktionsstellung in die Offenstellung erfolgt damit ohne Zeitverzögerung unmittelbar dann, sobald nicht korrekt vereinzelte Behälter und/oder ein nicht in korrekter Lage vereinzelter Behälter an dem zweiten Seitenführungsabschnitt anliegt. Die Führung ist dabei derart ausgebildet, dass der bewegliche zweite Seitenführungsabschnitt in der Produktionsstellung quer zur Transportrichtung derart von dem ersten Seitenführungsabschnitt beabstandet ist, dass eine Führung der Behälter stattfinden kann. Die Behälter können beispielsweise an Haltekragen an den Seitenführungsabschnitten geführt werden. Die Umschaltstellung des zweiten Seitenführungsabschnitts ist quer zur Transportrichtung zwischen der Produktionsstellung der Offenstellung angeordnet. Solange der zweite Seitenführungsabschnitt zwischen der Umschaltstellung und der Produktionsstellung ist bzw. bewegt wird, wird der bewegliche zweite Seitenführungsabschnitt durch das Federkraftelement in Richtung des ersten Seitenführungsabschnitts gedrückt, d. h. der bewegliche zweite Seitenführungsabschnitt wird durch das Federkraftelement in der Produktionsstellung gehalten. Das Federkraftelement kann den zweiten Seitenführungsabschnitt mit einer spezifischen quer zur Transportrichtung wirkenden Kraft in Richtung des ersten Seitenführungsabschnitts drücken. Wenn ein Behälter, der in einer inkorrekten Lage angeordnet ist, oder nicht in korrekter Lage vereinzelte Behälter entlang des zweiten Seitenführungsabschnitts geführt werden, erzeugen diese eine Gegenkraft auf den zweiten Seitenführungsabschnitt, die in Bewegungsrichtung des zweiten Seitenführungsabschnitts entgegen der Kraft des Federelements wirkt. Übersteigt die Gegenkraft die Kraft des Federelements, wird der zweite Seitenführungsabschnitt quer zur Transportrichtung weg von dem ersten Seitenführungsabschnitt bewegt. Sobald der zweite Seitenführungsabschnitt ausgehend von der Produktionsstellung über die Umschaltstellung bewegt wird, wechselt die Kraftrichtung des Federkraftelements. Das Federkraftelement drückt dann den zweiten Seitenführungsabschnitt von dem ersten Seitenführungsabschnitt weg in die Offenstellung. D. h., dass ausgehend von der Produktionsstellung nach dem Überschreiten der Umschaltstellung das Federkraftelement den zweiten Seitenführungsabschnitt automatisch in die Offenstellung drückt. Dies kann zeitlich unmittelbar nach dem Überschreiten der Umschaltstellung erfolgen. Es ist nicht erforderlich, dass zunächst eine Steuerung eine Bewegung des zweiten Seitenführungsabschnitts in die Offenstellung auslöst bzw. ansteuert. Nicht korrekt vereinzelte Behälter bzw. Behälter, die eine inkorrekte Lage aufweisen, können damit mit erhöhter Sicherheit ausgeworfen werden. Weiter kann ein Zeitverlust durch eine Maschinensteuerung vermieden werden, sodass das Öffnen der Führung schneller erfolgen kann.

In der Umschaltstellung kann das Federkraftelement einen sogenannten Totpunkt aufweisen, in der das Federkraftelement den zweiten Seitenführungsabschnitt weder in Richtung des ersten Seitenführungsabschnitts drückt noch von dem ersten Seitenführungsabschnitt weggedrückt. In der Umschaltstellung erfolgt damit ein Wechsel der Kraftrichtung des Federkraftelements.

Das erste Seitenführungselement kann beispielsweise eine stationäre Schiene sein oder ein Teil einer sich mit dem geführten Behälter bewegenden Führung, beispielsweise ein Transportrad oder ein Ladestern, sein.

Ein nicht korrekt vereinzelter Behälter kann beispielsweise ein Behälter sein, der nicht korrekt in der Tasche eines Transportrads sitzt. So kann beispielsweise der Behälter durch eine Ecke des Transportrads am Rand der Tasche zumindest teilweise verhakt sein und kann sich bei einem weiteren Transport festsetzen bzw. nicht korrekt an ein anderes Transportrad oder Haltewerkzeug übergeben werden.

Eine in korrekter Lage eines Behälters kann beispielsweise ein Behälter sein, der lediglich mit einem Teil seines Haltekragens auf einer Führung angeordnet ist und gegebenenfalls eine zur Vertikalen geneigte Orientierung aufweist.

Gemäß einigen Ausführungsbeispielen ist denkbar, dass das Federkraftelement zum Umpositionieren der Umschaltstellung zwischen der Produktionsstellung und der Offenstellung ausgebildet sein kann.

Damit kann mit dem Federkraftelement eingestellt werden, wie groß der Abstand zwischen der Produktionsstellung und der Umschaltstellung bzw. der Offenstellung und der Umschaltstellung quer zur Transportrichtung ist. Je näher die Umschaltstellung an der Produktionsstellung angeordnet ist, desto weniger muss der zweite Seitenführungsabschnitt ausgehend von der Produktionsstellung von dem ersten Seitenführungsabschnitt wegbewegt werden, damit das Federkraftelement den zweiten Seitenführungsabschnitt automatisch in die Offenstellung drückt. Umgekehrt gilt, dass je weiter die Umschaltstellung von der Produktionsstellung weg angeordnet ist, desto mehr muss der zweiter Seitenführungsabschnitt ausgehend von der Produktionsstellung von dem ersten Seitenführungsabschnitt wegbewegt werden. Damit kann die Empfindlichkeit eingestellt werden, wann die Vorrichtung einen Behälter an dem zweiten Seitenführungsabschnitt auswirft.

Gemäß einigen Ausführungsbeispielen ist denkbar, dass das Federkraftelement eine mechanische Feder, insbesondere eine Schraubenfeder, eine pneumatische Feder, insbesondere als Gasdruckfeder, eine magnetische Feder, insbesondere umfassend zwei mit gleichen Polen zueinander gerichtete Magneten, und/oder eine elektromagnetische Feder, insbesondere einen mit konstanter Kraftrichtung betriebenen Linearmotor, aufweisen kann.

Eine mechanische Feder kann beispielsweise in einem gestauchten Zustand in der Produktionsstellung schwenkbar an dem zweiten Seitenführungsabschnitt und einer stationären Lagerung befestigt sein. Dabei kann die mechanische Feder in der Produktionsstellung beispielsweise schräg zur Bewegungsrichtung des zweiten Seitenführungsabschnitt angeordnet sein. In der Umschaltstellung kann die mechanische Feder dann beispielsweise senkrecht zu dem zweiten Seitenführungsabschnitt angeordnet sein, sodass die mechanische Feder keine Kraft in der Bewegungsrichtung des zweiten Seitenführungsabschnitt bewirkt. In der Offenstellung kann die Feder dann ebenfalls schräg zur Bewegungsrichtung des zweiten Seitenführungsabschnitts angeordnet sein, wobei die Feder dann in eine andere Richtung ausgerichtet ist, als in der Produktionsstellung. Insgesamt kann die Feder bei der Bewegung von der Produktionsstellung in die Offenstellung um die Befestigung an der stationären Lagerung geschwenkt werden. Damit kann mit einfachen Mitteln ein Federkraftelement bereitgestellt werden.

Die gleichen Ausführungen gelten analog für eine pneumatische Feder. Weiter ist denkbar das eine hydraulische Feder verwendet werden kann.

Weiter ist denkbar, dass eine elektromagnetische Feder, die beispielsweise einen mit konstanter Kraftrichtung betriebenen Linearmotor aufweisen kann, als Federkraftelement verwendet werden kann.

Weiter kann eine magnetische Feder zweiteilig ausgebildet sein. Der erste Teil kann einen ersten Magneten aufweisen, der an dem zweiten Seitenführungsabschnitt beispielsweise mit einem seiner Pole zum zweiten Teil weisend quer zur Bewegungsrichtung des zweiten Seitenführungselements befestigt ist. Der zweite Teil kann einen zweiten Magneten aufweisen, der stationär angeordnet ist und mit dem gleichen Pol zu dem ersten Magneten ausgerichtet ist, sodass eine abstoßende Kraft zwischen den Magneten bewirkt wird. In der Umschaltstellung können die beiden Magneten orthogonal zur Bewegungsrichtung des zweiten Seitenführungsabschnitts in einer Linie angeordnet sein. In der Offenstellung und der Produktionsstellung können die beiden Magneten entlang der Bewegungsrichtung des zweiten Seitenführungsabschnitts versetzt zueinander angeordnet sein.

Eine magnetische Feder kann wartungsarm ausgebildet sein, da sie kontaktlos wirkt.

Gemäß einigen Ausführungsbeispielen ist denkbar, dass das mindestens eine Federkraftelement kraftverstellbar ausgebildet sein kann.

Durch die Verstellbarkeit der Kraft des viel Kraftelements kann die Geschwindigkeit, mit der der zweite Seitenführungsabschnitt in die Offenstellung bewegt werden kann, erhöht werden. Weiter kann auch die von den inkorrekt vereinzelten Behältern oder in korrekter Lage vereinzelten Behältern benötigte Gegenkraft eingestellt werden, mit der der zweite Seitenführungsabschnitt quer zur Transportrichtung bewegt werden muss. Idealerweise weist das Federkraftelement in der Produktionsstellung eine Kraft auf, die gerade so ausreicht, dass Schwingungen der geführten Behälter quer zur Transportrichtung oder durch das Führen der Behälter an der Vorrichtung verursachte Schwingungen den zweiten Seitenführungsabschnitt nicht über die Umschaltstellung bewegen können.

Gemäß einigen Ausführungsbeispielen ist denkbar, dass die Vorrichtung mindestens eine Blaseinrichtung zum Ausblasen mindestens eines auszuwerfenden Behälters in der Offenstellung aufweisen kann, wobei der zweite Seitenführungsabschnitt in der Offenstellung derart an mindestens einem Schaltelement der mindestens einen Blaseinrichtung anliegen kann, dass das mindestens eine Schaltelement die mindestens eine Blaseinrichtung einschaltet.

Mit der Blaseinrichtung kann das Auswerfen eines Behälters unterstützt werden. Die Blaseinrichtung kann gemäß diesen Ausführungsbeispielen eingeschaltet werden, sobald der zweite Seitenführungsabschnitt in die Offenstellung gebracht wird. In der Offenstellung kann der zweite Seitenführungsabschnitt das mindestens eine Schaltelement schalten, um die Blaseinrichtung einzuschalten. Damit kann automatisch ohne zusätzliche Steuerung eine Blaseinrichtung unterstützend bei dem Auswerfen eines Behälters mitwirken.

Gemäß einigen Ausführungsbeispielen ist denkbar, dass die Vorrichtung mindestens ein Stellelement zum Rückstellen des zweiten Seitenführungsabschnitts von der Offenstellung in die Produktionsstellung aufweisen kann.

Das Stellelement kann ebenfalls mittels eines Betätigungselements ausgelöst werden, sobald der zweite Seitenführungsabschnitt in die Offenstellung bewegt wird. Damit kann der zweite Seitenführungsabschnitt sofort nach Erreichen der Offenstellung wieder in die Produktionsstellung bewegt werden. Das Stellelement kann dazu eine Kraft auf den zweiten Seitenführungsabschnitt quer zur Transportrichtung bewirken, die den zweiten Seitenführungsabschnitt in Richtung des ersten Seitenführungsabschnitts bewegt und größer als die Kraft des Federkraftelements ist. Die Totzeit der Vorrichtung nach dem Auswerfen eines Behälters kann damit minimiert werden. Unter Totzeit kann dabei die Dauer verstanden werden, in der keine Behälter an dem zweiten Seitenführungsabschnitt vorbei bewegt werden können.

Das Stellelement kann beispielsweise ein pneumatischer, hydraulischer, elektrischer oder elektromagnetischer Motor sein.

Gemäß einem zweiten Aspekt wird ein Transportsystem für Behälter beschrieben, umfassend mindestens eine Vorrichtung gemäß der vorangegangenen Beschreibung.

Vorteile und Wirkungen sowie Weiterbildungen des Transportsystems ergeben sich aus den Vorteilen und Wirkungen sowie Weiterbildungen der oben beschriebenen Vorrichtung. Zur Vermeidung von Wiederholungen wird daher in dieser Hinsicht auf die vorangegangene Beschreibung verwiesen.

Gemäß einem dritten Aspekt wird eine Anlage zum Herstellen und/oder Behandeln mindestens eines Behälters beschrieben, umfassend mindestens ein Transportsystem für Behälter gemäß der vorangegangenen Beschreibung und/oder mindestens eine Vorrichtung gemäß der vorangegangenen Beschreibung, wobei sich mindestens ein Transportpfad entlang der Transportrichtung durch die Anlage erstreckt und das mindestens eine Transportsystem und/oder die mindestens eine Vorrichtung an dem mindestens einen Transportpfad angeordnet ist.

Vorteile und Wirkungen sowie Weiterbildungen der Anlage ergeben sich aus den Vorteilen und Wirkungen sowie Weiterbildungen der oben beschriebenen Vorrichtung und dem oben beschriebenen Transportsystem. Zur Vermeidung von Wiederholungen wird daher in dieser Hinsicht auf die vorangegangene Beschreibung verwiesen.

Im Folgenden wird die Erfindung anhand einer beispielhaften Ausführungsform mittels der beigefügten Zeichnung beschrieben. Es zeigen:
- Figur 1a-d: eine schematische Darstellung eines Transportsystems;
- Figur 2: eine schematische Darstellung eines ersten Ausführungsbeispiels der Vorrichtung in der Produktionsstellung;
- Figur 3a-c: eine schematische Darstellung eines ersten Ausführungsbeispiels der Vorrichtung beim Auswerfen;
- Figur 4a-c: eine schematische Darstellung eines zweiten Ausführungsbeispiels der Vorrichtung;
- Figur 5a-c: eine schematische Darstellung eines dritten Ausführungsbeispiels der Vorrichtung; und
- Figur 6: eine schematische Darstellung einer Anlage.

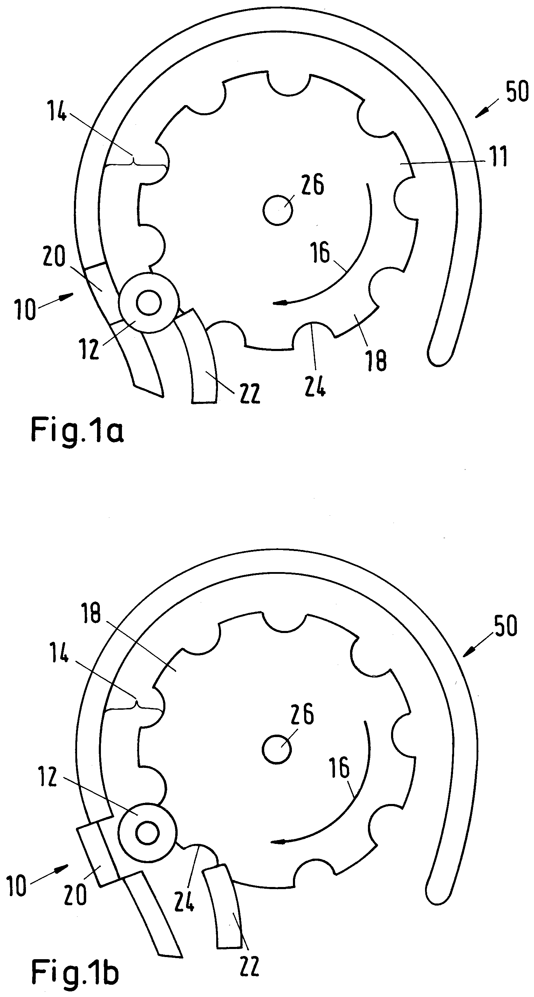

Die Vorrichtung zum Auswerfen wird gemäß Figur 1a in ihrer Gesamtheit mit dem Bezugszeichen 10 bezeichnet. Weiter kann die Vorrichtung 10 Teil eines Transportsystems 50 sein.

Das Transportsystem 50 kann beispielsweise ein Transportrad 11 aufweisen, das drehbar um eine Achse 26 gelagert sein kann. Behälter 12 können mittels eines Führungselements 22 in Taschen 24 des Transportrads 11 geführt werden, die an einem Umfang des Transportrads 11 angeordnet sein können. Die Behälter 12 können mit ihren Halsbereichen von den Taschen 24 gehalten werden. Ein Rand einer Tasche 24 kann dabei als Auflagefläche für einen Haltekragen eines Behälters 12 dienen.

Die Vorrichtung 10 weist weiter eine Führung 14 auf, entlang der die Behälter 12 geführt werden können. Die Führung in dem Ausführungsbeispiel nach Figur 1a kann durch die Drehung des Transportrads elf erfolgen, wodurch ein Behälter 12 entlang der Führung 14 geführt wird. Der Rand der Tasche 24 kann dabei den ersten Seitenführungsabschnitt 18 der Vorrichtung 10 bilden.

Quer zur Transportrichtung 16 ist ein zweiter Seitenführungsabschnitt 20 von dem ersten Seitenführungsabschnitt 18 beabstandet angeordnet. Der zweite Seitenführungsabschnitt 20 ist quer zur Transportrichtung 16 beweglich gelagert. In Figur 1a ist der zweite Seitenführungsabschnitt 20 in der Produktionsstellung angeordnet, in der er Behälter 12 zumindest abschnittsweise entlang der Transportrichtung 16 führen kann.

In diesem Ausführungsbeispiel kann der Behälter 12 beispielsweise eine inkorrekte Lage aufweisen und beispielsweise schräg in der Tasche 24 angeordnet sein.

In Figur 1b zeigt den zweiten Seitenführungsabschnitt 12 in der Offenstellung, in der ein Behälter 12 am zweiten Seitenführungsabschnitt 20 ausgeworfen werden kann. Der zweite Seitenführungsabschnitt 20 ist in der Offenstellung quer zur Transportrichtung 16 weiter von dem ersten Seitenführungsabschnitt 18 als in der Produktionsstellung angeordnet. Dadurch wird die Führung 14 zwischen dem ersten Seitenführungsabschnitt 18 und dem zweiten Seitenführungsabschnitt 20 derart verbreitert, dass ein in der Produktionsstellung geführter Behälter 12 nicht mehr gehalten wird und ausgeworfen wird, indem der Behälter 12 durch die Führung 14 fällt.

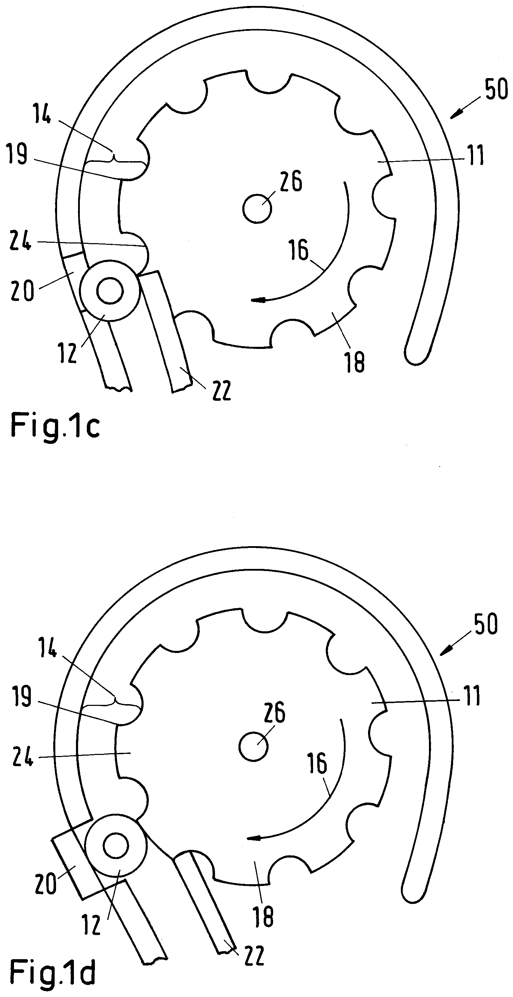

Figur 1c zeigt einen weiteren Anwendungsfall der Erfindung. In diesem Anwendungsfall kann der Behälter 12 beispielsweise durch ein Zahn 19 des Transportrads 11, der an eine Tasche 24 angrenzen kann, gehalten werden. Der Behälter 12 kann an dem Zahn 19 verhakt sein bzw. kann der Zahn 19 eine Wand des Behälters 12 eindrücken. Dadurch kann eine Kraft durch den Zahn 19 auf den Behälter 12 bewirkt werden, die hinsichtlich der Drehachse 26 radial nach außen wirken kann.

Wie in Figur 1d dargestellt, kann durch diese Kraft der zweite Seitenführungsabschnitt 20 nach außen gedrückt werden und dadurch in die Offenstellung gelangen. Der Behälter 12, der in diesem Ausführungsbeispiel inkorrekt vereinzelt wurde, kann dann ausgeworfen werden.

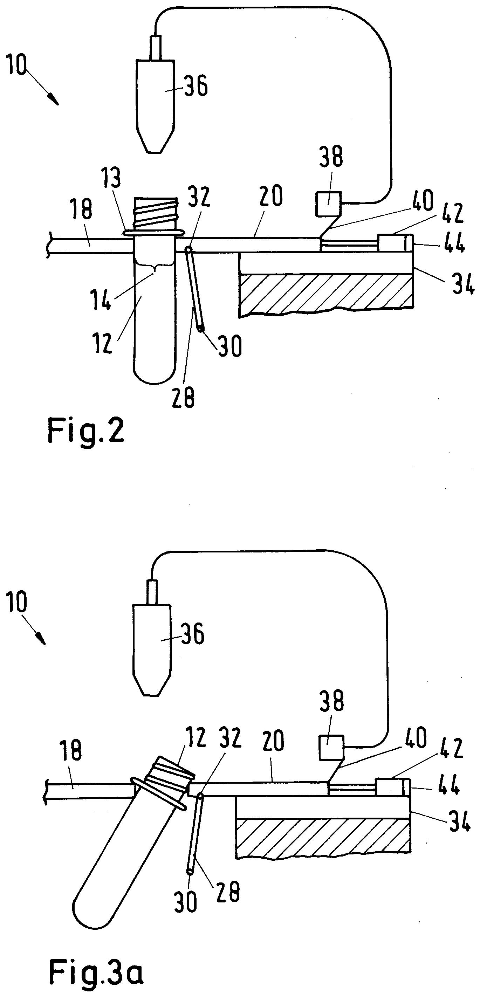

In Figur 2 ist ein Ausführungsbeispiel der Vorrichtung 10 zum Auswerfen schematisch dargestellt. Ein Behälter 12 in Form eines Vorformlings für einen Behälter 12 ist mit einem Haltekragen 13 auf dem ersten Seitenführungsabschnitt 18 und dem zweiten Seitenführungsabschnitt 20 gelagert. In diesem Ausführungsbeispiel ist der Behälter 12 in korrekter Lage und korrekt vereinzelt dargestellt. Die Führung 14 kann dabei zwischen dem ersten Seitenführungsabschnitt 18 und dem zweiten Seitenführungsabschnitt 20 einen Abstand aufweisen, der lediglich geringfügig größer als die Breite des Behälters 12 unter dem Halskragen 13 sein kann. Die Seitenführungsabschnitte 18, 20 bilden eine seitliche Führung für den Behälter 12, sodass der Behälter 12 sich lediglich entlang der Transportrichtung 16 bewegen kann, die in Figur 2 senkrecht auf der Bildebene steht.

Wie in Figur 2 weiter dargestellt, weist die Vorrichtung 10 weiter ein Federkraftelement 28 auf, das in der in Figur 2 dargestellten Produktionsstellung der Vorrichtung 10 den zweiten Seitenführungsabschnitt 20 zu dem ersten Seitenführungsabschnitt 18 drückt. In diesem Ausführungsbeispiel ist das Federkraftelement 28 als mechanische Feder, beispielsweise als Schraubenfeder ausgebildet, die in der Produktionsstellung gestaucht ist. Weiter ist ein erstes Endstück 30 des Federkraftelements 28 schwenkbar und stationär gelagert. Das Federkraftelement 28 kann damit um das erste Endstück 30 geschwenkt werden.

Ein gegenüberliegendes zweites Endstück 32 des Federkraftelements 28 ist schwenkbar an dem zweiten Seitenführungsabschnitt 20 gelagert. Der zweite Seitenführungsabschnitt 20 kann damit quer zur Transportrichtung 16, in Figur 2 nach links oder nach rechts, bewegt werden. Dazu kann der zweite Seitenführungsabschnitt 20 auf einem Lager 34 beweglich gelagert sein.

Das erste Endstück 30 kann zum Einstellen der Kraft und der Position der Umschaltstellung gelöst und an einer anderen Position stationär neu befestigt werden. So kann beispielsweise eine Bewegung des ersten Endstücks 30 nach links oder nach rechts die Position der Umschaltstellung verschieben. Weiter kann dadurch und/oder durch eine Verschiebung des ersten Endstückes zu dem zweiten Seitenführungsabschnitt 20 hin oder von dem zweiten Seitenführungsabschnitt 20 weg die Stauchung des Federkraftelements 28 vergrößert oder verringert werden, um die Kraft zu verändern, die das Federkraftelement 28 bewirkt.

Weiter kann der zweite Seitenführungsabschnitt 20 in Richtung des ersten Seitenführungsabschnitts 18 gegen einen Anschlag gedrückt werden, sodass der zweite Seitenführungsabschnitt 20 in einem Mindestabstand zu dem ersten Seitenführungsabschnitt 18 angeordnet werden kann, um eine Führung 14 bereitzustellen, die breit genug für eine Führung der Behälter 12 verbleibt.

Weiter ist in Figur 2 ein Schaltelement 40 dargestellt, das mit dem zweiten Seitenführungsabschnitt 20 bewegungsgekoppelt sein kann. In der Produktionsstellung des zweiten Seitenführungsabschnitts 20 ist das Schaltelement 20 ausgeschaltet. Wenn der zweite Seitenführungsabschnitt 20 in Richtung der Offenstellung bewegt wird, wird das Schaltelement 40 eingeschaltet und kann ein Ventil 38 öffnen, über das Druckluft zu einer Blaseinrichtung 36 geleitet werden kann.

Weiter ist ein Stellelement 42 dargestellt, das beispielsweise als pneumatischer oder elektrischer Linearmotor ausgebildet sein kann. Das Stellelement 42 kann durch ein Betätigungselement 44 betätigt werden. Wenn das Stellelement 42 durch das Betätigungselement 44 betätigt wird, drückt das Stellelement 42 den zweiten Seitenführungsabschnitt 20 in Richtung des ersten Seitenführungsabschnitts 18. Eine Betätigung des Stellelements 42 kann stattfinden, wenn der zweite Seitenführungsabschnitt 20 in die Offenstellung bewegt wird.

Das Betätigungselement 44 kann beispielsweise ein Endschalter sein, der durch eine Bewegung des Stellelements 42 in eine eingefahrenen Stellung, wenn der zweite Seitenführungsabschnitt 20 in der Offenstellung ist, betätigt werden kann. Alternativ kann das Betätigungselement 44 auch ein berührungsloser Sensor sein, der eine bestimmte Stellung des Stellelement 42 erfassen kann und dann auslösen kann. Weiter alternativ kann das Betätigungselement 44 auch eine Position des Stellelements 42 zwischen zwei Bewegungs-Endzuständen darstellen und erfassen. In entsprechenden Positionen können dann bestimmte Aktionen durch das Betätigungselement 44 ausgelöst werden.

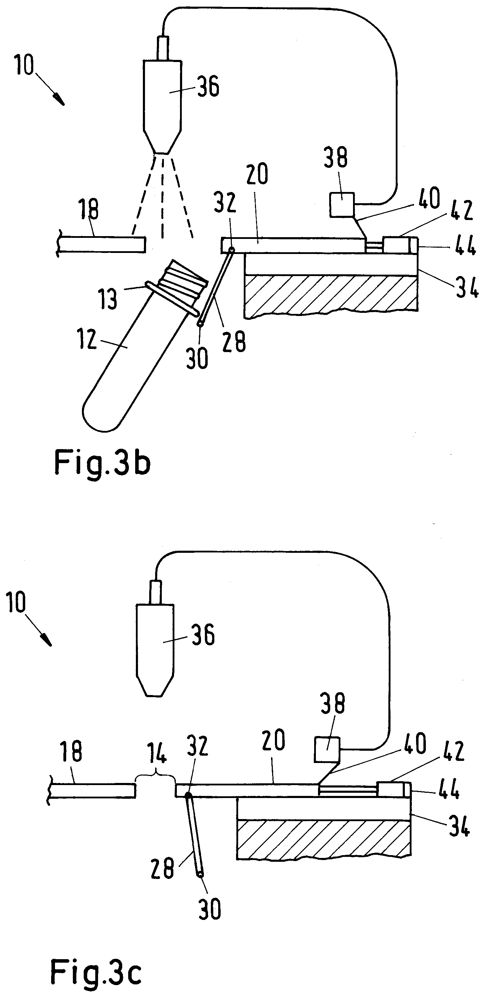

In Figur 3a bis 3c ist ein Auswurfvorgang in verschiedenen Stadien dargestellt.

In Figur 3a ist ein Behälter 12 in einer inkorrekten Lage dargestellt. Es ist zu vermeiden, dass der Behälter 12 in dieser Lage weiter transportiert wird, damit keine Schäden an weiteren Komponenten oder Produktionsstopps verursacht werden.

Der Behälter 12 drückt durch seine inkorrekte Lage den zweiten Seitenführungsabschnitt 20 quer zur Transportrichtung 16 von dem ersten Seitenführungsabschnitt 18 weg. Das Federkraftelement 28 wird in diesem Ausführungsbeispiel dabei um das erste Endstück 30 geschwenkt. Dabei wird das Federkraftelement 28 in diesem Ausführungsbeispiel zunächst weiter gestaucht, bis der zweite Seitenführungsabschnitt 20 die Umschaltstellung erreicht. In der Umschaltstellung bewirkt das Federkraftelement 28 eine Kraft, die lediglich senkrecht zu der Bewegungsrichtung des zweiten Seitenführungsabschnitts 20 wirkt. Krafttechnisch ist in Bewegungsrichtung des zweiten Seitenführungsabschnitts 20 damit ein Totpunkt erreicht. Weiter sind in diesem Ausführungsbeispiel das erste Endstück 30 und das zweite Endstück 32 in der Umschaltstellung auf einer Linie angeordnet, die senkrecht zur Bewegungsrichtung des zweiten Seitenführungsabschnitts 20 angeordnet ist.

Wenn der zweite Seitenführungsabschnitt 20 aus der Umschaltstellung weiter von dem ersten Seitenführungsabschnitt 18 wegbewegt wird, kann das Federkraftelement 28 eine Kraftkomponente bereitstellen, die den zweiten Seitenführungsabschnitt 20 von dem ersten Seitenführungsabschnitt 18 wegbewegt. Das Federkraftelement 28 drückt daher nach dem Überschreiten der Umschaltstellung in Richtung der Offenstellung den zweiten Seitenführungsabschnitt 20 in Richtung der Offenstellung.

Die Führung 14 wird dadurch gemäß Figur 3b derart weit verbreitert, dass der Haltekragen 13 des Behälters 12 nicht mehr von den Seitenführungsabschnitten 18, 20 gehalten werden kann. Der Behälter 12 kann damit durch die Führung 14 nach unten ausgeworfen werden. Figur 3b zeigt dabei die Offenstellung des zweiten Seitenführungsabschnitts 20.

In der Offenstellung kann weiter durch den zweiten Seitenführungsabschnitt 20 das Schaltelement 40 betätigt werden, sodass die Blaseinrichtung 36 unterstützend einen Luftstrom auf den Behälter 12 richten kann, der den Auswurf des Behälters 12 aus der Führung 14 beschleunigt.

Weiter kann in der Offenstellung auch das Stellelement 42 durch das Betätigungselement 44 betätigt werden und den zweiten Seitenführungsabschnitt 20 wieder in Richtung des ersten Seitenführungsabschnitts 18 drücken. Der zweite Seitenführungsabschnitt 20 kann damit unmittelbar nach dem Auswurf eines Behälters 12 wieder in die Produktionsstellung bewegt werden.

Durch die Betätigung des Betätigungselements 44 kann noch weitere Vorgänge ausgelöst werden. So kann beispielsweise anderen Maschinen, die der Vorrichtung 10 in Transportrichtung der Behälter 12 nachfolgen, mitgeteilt werden, dass an dieser bestimmten Position in der Abfolge der Behälter 12 ein Behälter 12 fehlt. Dadurch können die Maschinen die entsprechende Position bei der Behandlung der Behälter 12 entweder überspringen oder für entsprechende Behandlungsstationen einen Produktionsstopp auslösen, bis wieder ein Behälter für die entsprechende Behandlungsstation bereitgestellt werden kann.

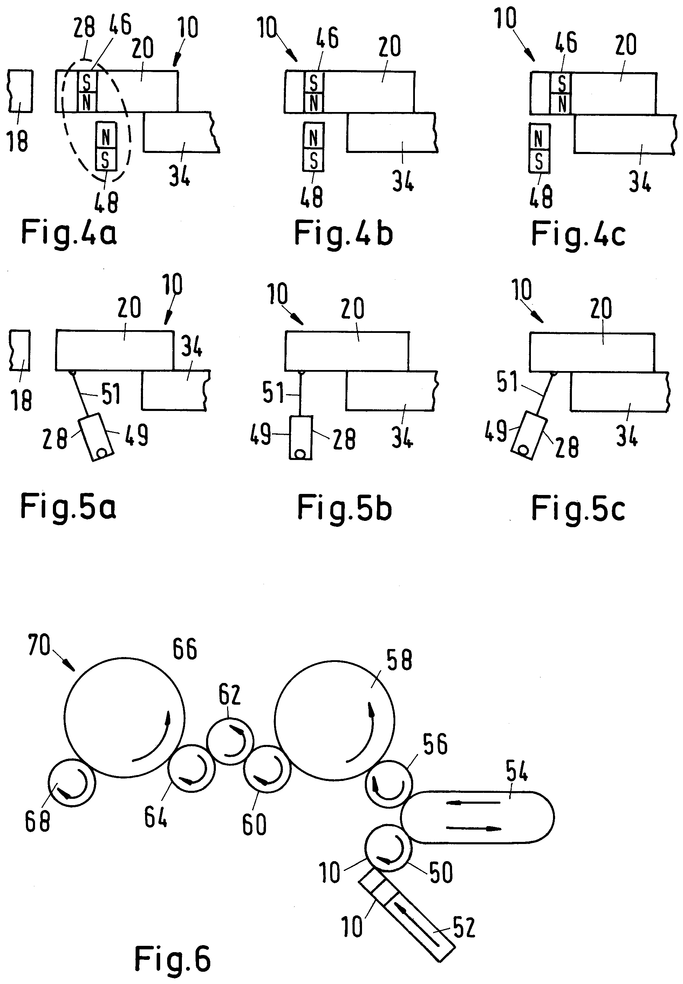

In den Figuren 4a bis 4c ist ein weiteres Beispiel des Federkraftelements 28 der Vorrichtung 10 dargestellt. Das Federkraftelement 28 weist in diesem Ausführungsbeispiel zwei Teile auf, wobei der erste Teil einen ersten Magneten 46 aufweist und der zweite Teil einen zweiten Magneten 48. Der zweite Magnet 48 kann stationär angeordnet sein, zum Einstellen des Federkraftelements 28 jedoch neu positioniert werden.

Der erste Magnet 46 kann an dem zweiten Seitenführungsabschnitt 20 angeordnet sein. Der erste Magnet 46 und der zweite Magnet 48 sind derart ausgerichtet, dass in der Umschaltstellung, die in Figur 4b dargestellt ist, zwei gleiche Magnetpole zueinander weisen und damit eine gegenseitig abstoßende Kraft bewirken, die wie eine Federkraft wirken kann. Die abstoßende Kraft zwischen den gleichen Magnetpolen des ersten Magneten 46 und des zweiten Magneten 48 weist analoge Eigenschaften wie eine mechanische Feder auf. So kann ein Annähern der gleichen Magnetpole dabei wie eine Stauchung einer mechanischen Feder wirken. Daher können die oben angeführten Erläuterungen zu den anderen Ausführungsbeispielen analog auf das Ausführungsbeispiel nach den Figuren 4a bis 4c verstanden werden.

Figur 4a kann dabei die Produktionsstellung und Figur 4c die Offenstellung darstellen.

Figuren 5a bis 5c zeigt ein weiteres Ausführungsbeispiel des Federkraftelements 28. In diesem Ausführungsbeispiel weist das Federkraftelement einen Linearmotor 49 auf, der einen Schlitten 51 mit einer konstanten Kraft in einer Richtung weg von dem Linearmotor 49 bewegt.

Der Linearmotor 49 kann schwenkbar an einem stationären Schwenklager gelagert sein. Der Schlitten 51 kann schwenkbar an dem zweiten Seitenführungsabschnitt 20 befestigt sein. Jedoch ist auch eine umgekehrte Konfiguration denkbar.

Figur 5a zeigt dabei die Produktionsstellung, in der der Linearmotor 49 den zweiten Seitenführungsabschnitt 20 in Richtung des ersten Seitenführungsabschnitts 18 drückt.

Figur 5b zeigt die Umschaltstellung, in der keine Kraft in Bewegungsrichtung des zweiten Seitenführungsabschnitts 20 durch den Linearmotor 49 bewirkt wird.

Figur 5c zeigt die Offenstellung. Der Linearmotor 51 drückt hier den zweiten Seitenführungsabschnitt 20 von dem ersten Seitenführungsabschnitt 18 weg.

Anstatt eines Linearmotors 21 gemäß den oberen Erläuterungen kann beispielsweise eine Gasdruckfeder verwendet werden.

Figur 6 zeigt eine Anlage 70 zum Herstellen und/oder Behandeln von Behältern. Die Anlage 70 kann eine Behälterherstellungsmaschine 58 aufweisen, in der Vorformlinge aus thermoplastischem Material zu Behältern 12 umgeformt werden können.

Die Vorformlinge können dazu in einer Heizstrecke 54 thermisch konditioniert werden.

Die Vorformlinge können weiter mittels einer Zuführeinrichtung 52 der Anlage 70 zugeführt werden. Die Zuführeinrichtung 52 kann eine Vorrichtung 10 gemäß den oben angeführten Erläuterungen aufweisen. Dabei kann die Zuführeinrichtung 52 einen Vorformlingsstrom bereitstellen, der entlang von zwei parallel angeordneten Führungsschienen einer Führung transportiert werden kann.

Mit der Vorrichtung 10 können Vorformlinge, die sich in einer inkorrekten Lage in den Führungsschienen befinden, ausgeworfen werden.

An die Zuführeinrichtung 52 kann sich ein Transportsystem 50 gemäß den obigen Erläuterungen anschließen, das alternativ oder zusätzlich eine Vorrichtung 10 aufweisen kann.

Die Anlage 70 kann weiter eine Behandlungsmaschine 66 für Behälter sowie weitere Transportvorrichtungen 56, 60, 62, 64, 68 aufweisen. Eine Vorrichtung 10 kann alternativ oder zusätzlich weiter an mindestens einer der Transportvorrichtungen 56, 60, 62, 64, 68 angeordnet sein. Auf diese Weise können beispielsweise thermisch konditionierte Vorformlinge und/oder bereits fertig hergestellte Behälter 12 ausgeworfen werden, wenn sie in einer falschen Lage transportiert werden oder inkorrekt vereinzelt wurden.

Das oben beschriebene Beispiel dient in keiner Weise einer Beschränkung der Erfindung. Vielmehr kann die Erfindung in vielfältiger Weise abgewandelt werden. Alle oben beschriebenen Merkmale der Erfindung können allein oder in Kombination miteinander wesentlich für die Erfindung sein.

### Bezugszeichenliste

- 10: Vorrichtung zum Auswerfen
- 11: Transportrad
- 12: Behälter
- 13: Haltekragen
- 14: Führung
- 16: Transportrichtung
- 18: erster Seitenführungsabschnitt
- 19: Zahn
- 20: zweiter Seitenführungsabschnitt
- 22: Führungselement
- 24: Tasche
- 26: Achse
- 28: Federkraftelement
- 30: erstes Endstück
- 32: zweites Endstück
- 34: Lager
- 36: Blaseinrichtung
- 38: Schaltelement
- 40: Schaltelement
- 42: Stellelement
- 44: Betätigungselement
- 46: Magnet
- 48: Magnet
- 49: Linearmotor
- 50: Transportsystem
- 51: Schlitten
- 52: Zuführeinrichtung
- 54: Heizstrecke
- 56: Transportvorrichtung
- 58: Behälterherstellungsmaschine
- 60: Transportvorrichtung
- 62: Transportvorrichtung
- 64: Transportvorrichtung
- 66: Behandlungsmaschine
- 68: Transportvorrichtung
- 70: Anlage

## Patentansprüche

1. Vorrichtung (10) zum Auswerfen mindestens eines Behälters (12), umfassend mindestens eine Führung (14) zum Führen des mindestens einen Behälters (12) entlang einer Transportrichtung (16) mit einem ersten Seitenführungsabschnitt (18) und einem quer zur Transportrichtung (16) von dem ersten Seitenführungsabschnitt (18) beabstandet angeordneten zweiten Seitenführungsabschnitt (20), der zwischen einer Produktionsstellung zum Führen des mindestens einen Behälters (12) entlang der Transportrichtung (16) und einer Offenstellung, in der der zweite Seitenführungsabschnitt (20) quer zur Transportrichtung (16) weiter von dem ersten Seitenführungsabschnitt (18) als in der Produktionsstellung angeordnet ist, beweglich gelagert ist, **dadurch gekennzeichnet, dass** der zweite Seitenführungsabschnitt (20) zwischen der Produktionsstellung und der Offenstellung eine Umschaltstellung aufweist, wobei die Vorrichtung (10) weiter mindestens ein Federkraftelement (28) aufweist, das an dem zweiten Seitenführungsabschnitt (20) derart befestigt ist, dass das mindestens eine Federkraftelement (28) den zweiten Seitenführungsabschnitt (20) zwischen der Produktionsstellung und der Umschaltstellung quer zur Transportrichtung (16) zu dem ersten Seitenführungsabschnitt (18) drückt und den zweiten Seitenführungsabschnitt (20) zwischen der Offenstellung und der Umschaltstellung quer zur Transportrichtung (16) von dem ersten Seitenführungsabschnitt (18) weg drückt.

2. Vorrichtung (10) nach Anspruch 1, **dadurch gekennzeichnet, dass** das Federkraftelement (28) zum Umpositionieren der Umschaltstellung zwischen der Produktionsstellung und der Offenstellung ausgebildet ist.

3. Vorrichtung (10) nach Anspruch 1 oder 2, **dadurch gekennzeichnet, dass** das Federkraftelement (28) eine mechanische Feder, insbesondere eine Schraubenfeder, eine pneumatische Feder, insbesondere eine Gasdruckfeder, eine magnetische Feder, insbesondere umfassend zwei mit gleichen Polen zueinander gerichtete Magneten (46, 48), und/oder eine elektromagnetische Feder, insbesondere einen mit konstanter Kraftrichtung betriebenen Linearmotor (49), aufweist.

4. Vorrichtung (10) nach einem der vorangegangenen Ansprüche, **dadurch gekennzeichnet, dass** das mindestens eine Federkraftelement (28) kraftverstellbar ausgebildet ist.

5. Vorrichtung (10) nach einem der vorangegangenen Ansprüche, **dadurch gekennzeichnet, dass** die Vorrichtung (10) mindestens eine Blaseinrichtung (36) zum Ausblasen mindestens eines auszuwerfenden Behälters (12) in der Offenstellung aufweist, wobei der zweite Seitenführungsabschnitt (20) in der Offenstellung derart an mindestens einem Schaltelement (38) der mindestens einen Blaseinrichtung (36) anliegt, dass das mindestens eine Schaltelement (38) die mindestens eine Blaseinrichtung (36) einschaltet.

6. Vorrichtung (10) nach einem der vorangegangenen Ansprüche, **dadurch gekennzeichnet, dass** die Vorrichtung (10) mindestens ein Stellelement (42) zum Rückstellen des zweiten Seitenführungsabschnitts (20) von der Offenstellung in die Produktionsstellung aufweist.

7. Transportsystem (50) für Behälter (12), umfassend mindestens eine Vorrichtung (10) gemäß einem der vorangegangenen Ansprüche.

8. Anlage (70) zum Herstellen und/oder Behandeln mindestens eines Behälters (12), umfassend mindestens ein Transportsystem (50) für Behälter (12) nach Anspruch 7 und/oder mindestens eine Vorrichtung (10) gemäß einem der Ansprüche 1 bis 6, wobei sich mindestens ein Transportpfad entlang der Transportrichtung (16) durch die Anlage (70) erstreckt und das mindestens eine Transportsystem (50) und/oder die mindestens eine Vorrichtung (10) an dem mindestens einen Transportpfad angeordnet ist.
